# DEMANDE DE BREVET EUROPEEN

(11) **EP 1 958 810 A2**
(43) Date de publication de la demande: **20.08.2008**
(21) Numéro de dépôt: 08151460.6
(22) Date de dépôt: 14.02.2008
(51) Int. Cl.: B60J 7/14, B60J 7/20

(54) **Véhicule à tablette escamotable et procédé de rangement du toit**

(30) Priorité: 15.02.2007 FR 0701122; 07.03.2007 FR 0701659
(71) Demandeur: Heuliez, 79140 Cerizay (FR)
(72) Inventeur: Desbois, Michaël, 79200 Parhenay (FR)
(74) Mandataire: Pichat, Thierry

(57) **Abrégé**

Il s'agit de réaliser un véhicule convertible comprenant une caisse (3), un toit (5) escamotable articulé sur cette caisse, un capot arrière (15) recouvrant un espace (11) de rangement pour le toit, une tablette (17) montée mobile sur la caisse (3) entre une position avancée jusque devant le capot (15) et une position reculée sous lui, et une traverse (21) s'étendant entre le capot (15) et le toit (5) lorsqu'il est en position de recouvrement de l'habitacle. Des moyens de déplacement de la tablette (17) sont adaptés à déplacer celle-ci pour qu'en position reculée elle soit située en partie sous la traverse. Pour cela, on va la descendre et la reculer, libérant ainsi, pour le toit, un passage (31) situé, suivant l'axe longitudinal du véhicule, entre une zone située à proximité de l'arrière de l'habitacle (9) et la traverse.

## Description

L'invention concerne les véhicules convertibles pourvus d'un toit escamotable.

Typiquement, ces toits sont du type rétractable comprenant au moins deux éléments de toit repliables.

Dans ce domaine, l'invention concerne les véhicules où le toit est monté articulé sur la caisse, entre une position de recouvrement de l'habitacle et une position découverte, de rangement dans un espace arrière recouvert par un capot articulé sur la caisse. Une tablette est montée mobile sur la caisse par des - premiers- moyens adaptés à la déplacer entre une position avancée jusque devant le capot et une position reculée sous le capot, et une traverse s'étend transversalement à l'axe longitudinal du véhicule, entre le capot et le toit lorsque celui-ci est en position de recouvrement.

Un but de l'invention est de permettre un rangement aisé du toit dans l'espace de rangement, avec une cinématique simple des éléments qui l'environnent et qui participent à ses déplacements.

Une solution au moins partielle est trouvée dans le fait que les -premiers- moyens de déplacement de la tablette sont adaptés pour qu'en position reculée elle soit située en partie sous la traverse.

D'autres particularités de l'invention sont développées plus loin dans la description.

On notera toutefois dès à présent qu'un autre aspect de cette invention concerne la cinématique du toit et des éléments précités qui l'environnent.

Dans ce contexte, et à nouveau pour tendre vers le but précité, il est notamment proposé que :
- à partir de ladite position de recouvrement de l'habitacle par le toit, et alors que la tablette est en position avancée, on recule cette tablette sous le capot en la faisant passer sous la traverse, libérant ainsi, pour le toit, un passage situé, suivant l'axe longitudinal du véhicule, entre une zone située à proximité de l'arrière de l'habitacle et la traverse,
- on déplace le toit en l'articulant sur la caisse, jusqu'à le faire passer au travers dudit passage, en le reculant au moins en partie sous la traverse et sous la tablette alors en position reculée,
- et, une fois que le toit a entièrement traversé ledit passage et est situé dessous, on déplace en retour la tablette vers sa position avancée, par-dessus le toit, jusqu'à ce qu'elle ferme une partie au moins dudit passage réservé pour le toit.

La description plus détaillée qui suit se réfère maintenant aux dessins annexés, non-limitatifs et dans lesquels :
- la figure 1 est une vue partielle en perspective d'un véhicule conforme à l'invention,
- la figure 2 est une vue latérale montrant plusieurs positions du toit,
- les figures 3 et 4 sont des demi-vues arrière de dessus du véhicule toit fermé (figure 3) et toit ouvert (figure 4),
- les vues identiques des figures 5 et 6 montrent, toit retiré, le mouvement de repliement et de recul de la tablette,
- les figures 7 et 8 montrent, en perspective de dessous, la tablette et son environnement immédiat, avec le mouvement des volets,
- les figures 9 et 10 sont à nouveau des demi-vues de dessus de détails d'un toit possible, respectivement fermé et ouvert,
- et la figure 11 montre une variante de réalisation de la tablette, de trois quarts arrière plongeant.

Ci-après, on doit comprendre que ce qui est indiqué concernant un côté du véhicule concerne également l'autre côté, par symétrie par rapport à un plan médian vertical passant par l'axe longitudinal X du véhicule.

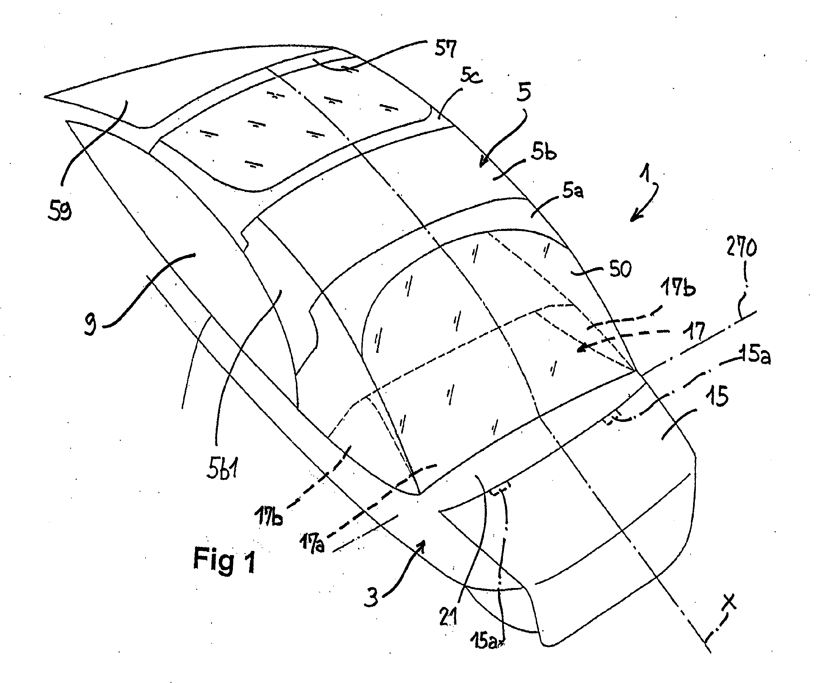

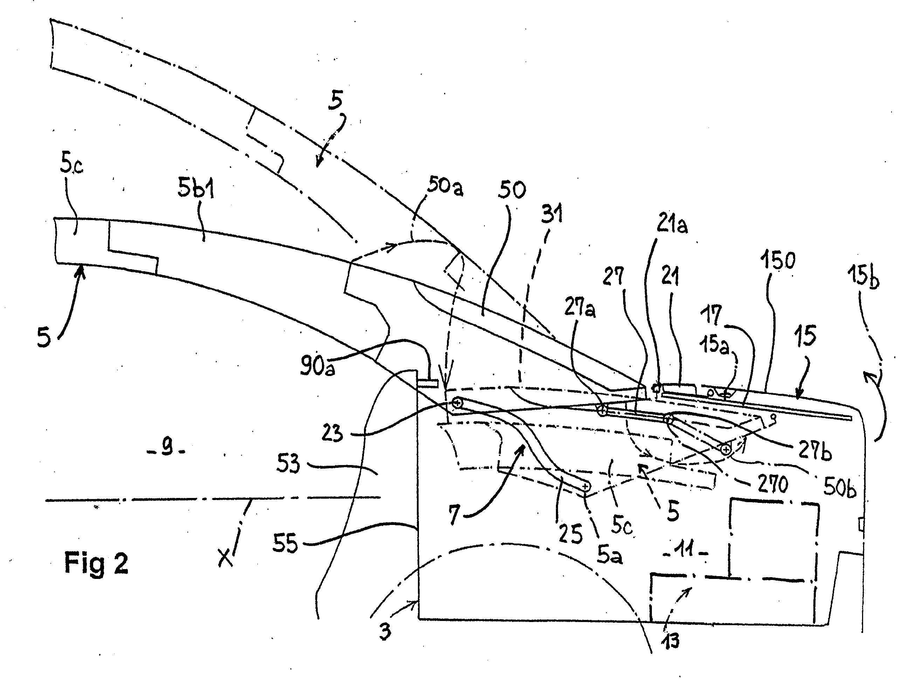

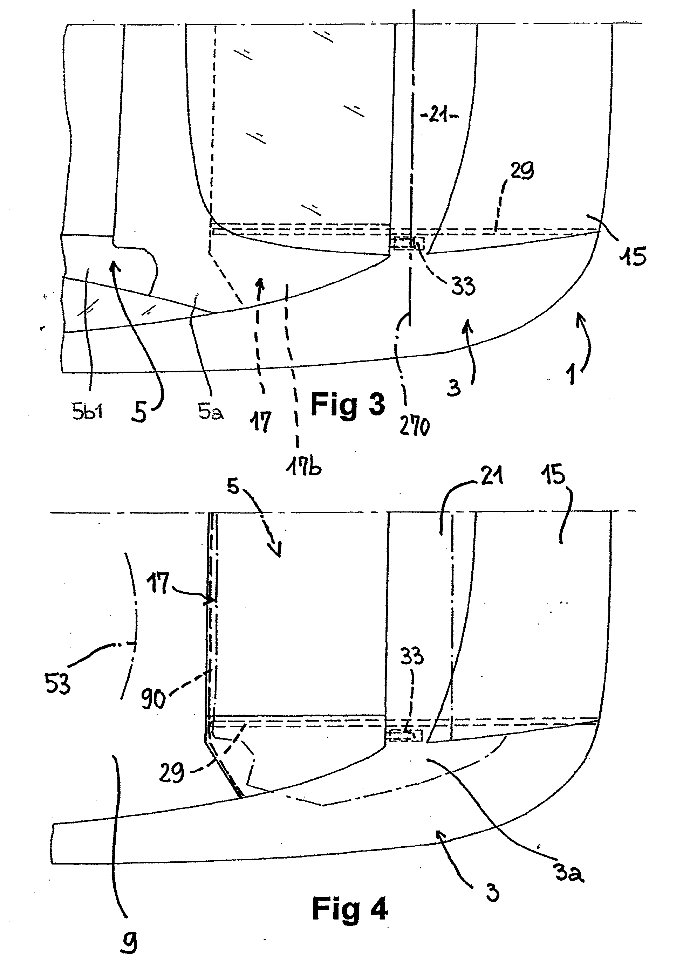

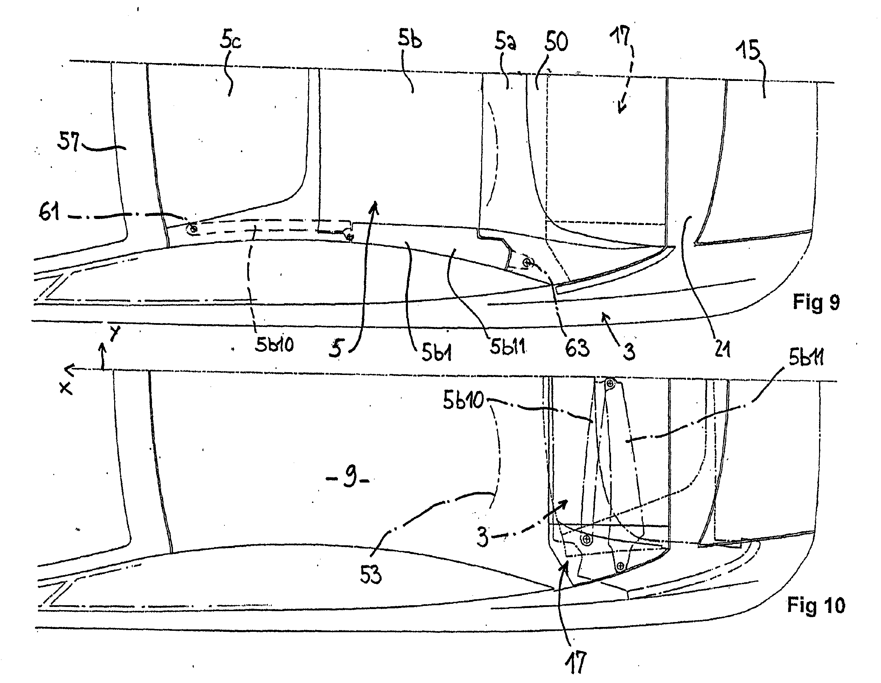

Figure 1, le véhicule convertible 1 comprend une caisse 3. Des moyens 7 d'articulation permettent au toit rétractable 5 d'être mobile entre une position de recouvrement de l'habitacle 9, comme montré figures 1, 2 en traits pleins-, 3 et 9, et une position de découvrement de cet habitacle, comme figure 2, où l'on voit, à gauche, le toit rangé replié dans le coffre, ou encore figures 4 et 10.

En position découverte, le toit 5 est rangé dans un espace 11 situé derrière l'habitacle. Cet espace constitue favorablement le coffre arrière du véhicule où l'on peut à la fois ranger le toit, en partie supérieure, et des bagages 13, en partie inférieure, sous le toit ; figure 2.

L'espace 11 est recouvert par un capot 15 articulé sur la caisse. Dans la réalisation illustrée, ce recouvrement est partiel. Toit rangé, l'avant de cet espace est recouvert par une tablette 17 pouvant venir dans l'alignement du capot.

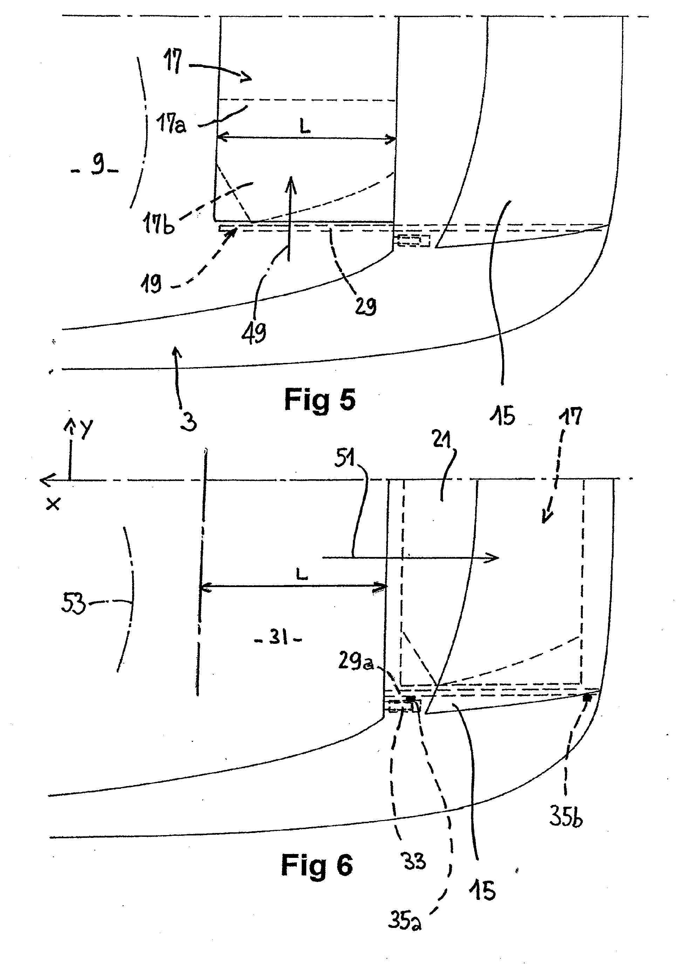

La tablette 17 est montée mobile sur la caisse avantageusement par des moyens 19 de déplacement adaptés de préférence à la déplacer entre une position avancée jusque devant le capot 15, comme montré figures 1, 3, 4, 9 et 10, et une position temporaire reculée sous ce capot, comme montré figures 2 et 6.

Factuellement, et de préférence, la tablette 17 sera montée mobile pour être :
- soit en position de service (figure 4), et alors positionnée au moins essentiellement dans une zone, telle 31 (fig.6), située entre l'arrière de l'habitacle et le capot 15,
- soit en position inactive (figure 6), et alors positionnée au moins essentiellement à l'écart de cette zone.

Dans cette position inactive, la tablette aurait pu être basculée le long de l'arrière de la séparation 55 entre l'habitacle 9 et le coffre 11, des moyens de déplacement lui permettant de basculer vers l'arrière et le haut, jusqu'à l'horizontale, pour atteindre sa position de service.

On a préféré qu'elle soit montée sur la caisse par les moyens 19 précités de déplacement adaptés à la déplacer entre sa position normale de service avancée jusque devant le capot 15, comme montré figures 1, 3, 4, et une position temporaire reculée sous ce capot, comme montré figures 2 et 6.

La caisse 3 comprend en outre une traverse 21 s'étendant transversalement à l'axe longitudinal X du véhicule, entre le capot 15 et le toit 5, lorsque celui-ci est en position de recouvrement.

Les -premiers- moyens 19 de déplacement de la tablette sont adaptés à déplacer celle-ci de manière qu'en position reculée elle soit située en partie sous la traverse 21, comme montré par exemple figures 2 et 6.

De préférence, la tablette sera alors entièrement sous le capot 15, sans en déborder à l'avant.

Outre que l'espace 11 de rangement peut être un vrai coffre, son capot 15, qui s'étend donc derrière la traverse 21, peut ainsi être monté articulé uniquement à l'avant, en 15a, pour basculer par rapport (sur) à la caisse 3 en s'ouvrant uniquement de l'arrière vers l'avant, comme montré par la flèche 15b sur la figure 2.

En outre, favorablement, les moyens 7 et 19 de déplacement du toit et de la tablette seront adaptés pour que :
- la tablette 17 passe de sa position avancée à sa position temporaire reculée en descendant et en reculant par rapport à la caisse, de sorte à passer sous la traverse 21,
- et le toit 5 passe de sa position de recouvrement à sa position de rangement dans l'espace 11, en passant sous cette traverse 21 et sous la tablette 17, comme on le voit notamment figure 2.

Outre, si nécessaire, un long bras articulé, à l'arrière, sur la caisse et, à l'avant, sur l'avant du toit (non représenté), les moyens de déplacement 7 comprennent un pion de guidage 23 guidé dans une glissière ondulée 25 fixe par rapport à (sur) la caisse, ainsi qu'une bielle 27 articulée en 27a sur le toit et en 27b sur la caisse, en un emplacement fixe, de manière à définir là un axe transversal 270 d'articulation arrière du toit.

Le mouvement oscillo-coulissant que l'on va pouvoir donner au toit 5 pour son repliement va lui permettre de passer, pour être rangé dans l'espace 11, à la fois sous la traverse 21 et sous la tablette 17, celle-ci étant alors en position reculée comme sur la figure 2 où l'on a montré en 50a et 50b la trajectoire courte et plongeante de repliement que peuvent si nécessaire suivre deux zones du toit.

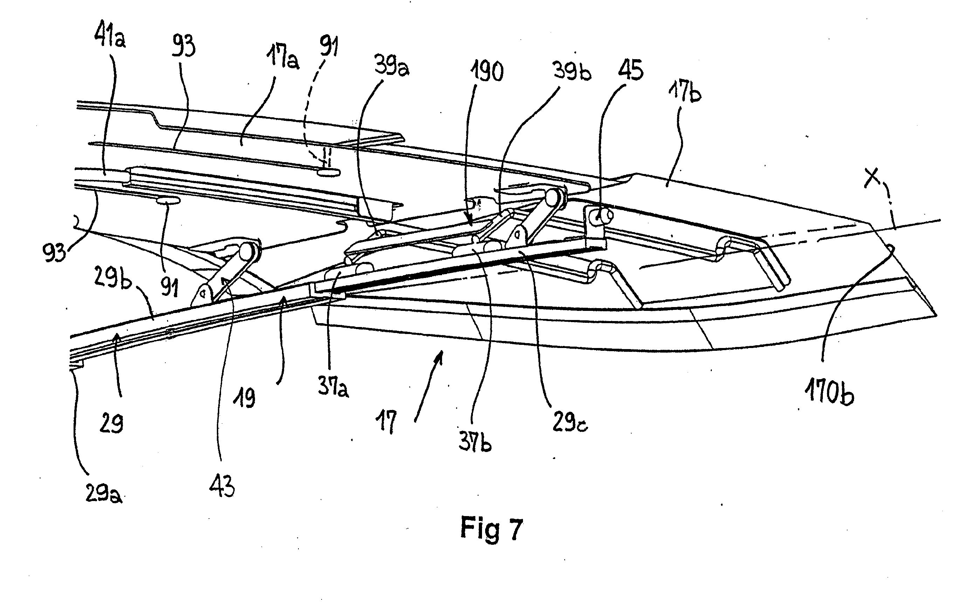

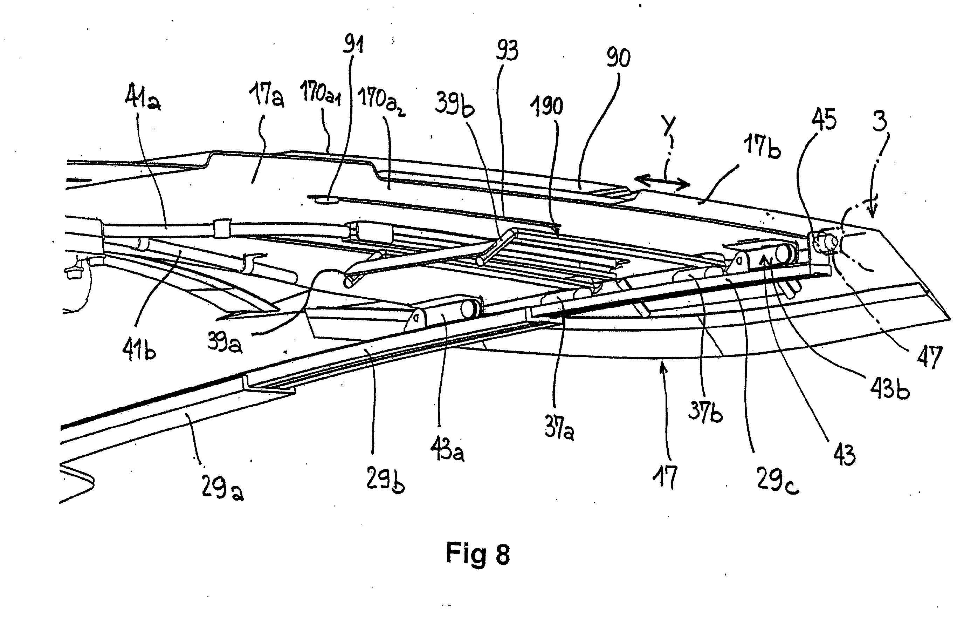

Pour avancer et reculer la tablette 17, on a favorablement prévu que les moyens de déplacement 19 comprennent des glissières 29 fixées à la caisse et orientées globalement parallèlement à l'axe X. Elles sont chacune en plusieurs parties - telles 29a, 29b, 29c figures 7 et 8 - de préférence rétractables et déployables longitudinalement.

De tels moyens vont permettre, par exemple via une motorisation, que l'avant des glissières recule, lors du recul de la tablette, et avance lors de son avancée.

Ainsi, comme montré notamment figures 5 et 6, il va être possible, lors du recul conjugué de la tablette et des glissières, de libérer entièrement de la longueur L l'espace 31 occupé en position avancée, libérant par la même cet espace pour le passage du toit.

Favorablement, la liaison entre la caisse et les glissières 29 sera prévue en partie haute de l'espace 11.

Pour laisser un maximum d'espace sous la zone réservée au toit dans l'espace 11, tout en assurant le mouvement souhaité de la tablette, les moyens de déplacement 19, 29 seront favorablement adaptés à déplacer la tablette pour qu'en position reculée une partie avant de celle-ci soit située à proximité immédiate de l'axe 270, à un niveau d'élévation plus élevé que cet axe, comme montré figure 2.

De préférence, l'agencement précité sera tel que, dans cette position reculée, la tablette recouvrira, à l'avant, l'axe 270 que l'on voit, figure 2, situé à proximité de la limite haute de l'espace 11 et à proximité de la traverse 21, légèrement plus bas. Ici, cet axe 270 est même situé sensiblement au droit de la traverse 21. On pourrait toutefois prévoir de le disposer toujours près d' elle, mais un peu en avant ou un peu en arrière.

Notamment figure 3, on a repéré 33 l'un des deux paliers liés à la caisse 3 par lesquels le toit 5 s'articule à cette caisse autour de l'axe 270.

Or, il est apparu favorable que, pour le rangement compact et simple du toit, ces paliers latéraux 33 soient situés à proximité, ici sensiblement en-dessous, de la zone où la traverse 21 se raccorde latéralement à la caisse.

Dans la pratique, la traverse 21 apparaîtra en face supérieure comme un élément de carrosserie se raccordant latéralement à la caisse sensiblement vers les ailes arrière de celle-ci, telle l'aile 3a figure 4.

Notamment figures 3 et 4, on remarquera qu'avantageusement les glissières longitudinales 29 sont situées entre les paliers 33.

Figure 6, on a repéré 35a, 35b respectivement les fixations entre la partie arrière 29a des glissières et respectivement le palier 33 concerné et la caisse, à l'extrémité arrière de la glissière correspondante.

Figures 7 et 8, on note que la tablette 17 comprend une partie centrale 17a et des volets latéraux, tels que 17b, montés mobiles par rapport à (sur) la partie centrale, transversalement à l'axe longitudinal X.

Plus précisément, des moyens de déplacement permettent ici de déplacer les volets et de monter et descendre en correspondance l'ensemble de la tablette par rapport à la caisse entre :
- une position escamotée basse, figure 8, où les volets sont rapprochés de la partie centrale 17a,
- et une position déployée haute, figure 7, où l'extrémité latérale libre 170b de ces volets 17b est plus éloignée de ladite partie centrale.

Pour cela, on conseille que les glissières 29 et les -seconds- moyens de déplacement 190 comprennent, les uns des butées, telles que 37a, 37b, les autres des rampes, telles que 39a, 39b, inclinées par rapport à l'horizontale et venant en contact avec les butées, pour faire monter et descendre les volets, lors de leur déplacement transversal par rapport à - sur - la partie centrale 17a de la tablette. Ce déplacement des volets peut être assuré par l'intermédiaire de câbles motorisés, tels que 41a, 41b.

Figures 7 et 8, les butées 37a, 37b sont portées par un tronçon mobile des glissières, ici 29c. Entre une partie au moins de ces glissières, ici cette partie avant 29c, et la partie centrale 17a sont montés des organes 43 de liaison permettant le déplacement en hauteur de la tablette par rapport auxdits moyens 29, en fonction du contact ou non entre les butées et les rampes. Ainsi, on permettra un mouvement de montée et de descente de l'ensemble de la tablette, en fonction du contact butées/rampes.

Dans l'exemple préféré illustré, il s'agit de biellettes 43a, 43b articulées à l'une et l'autre de leurs extrémités respectivement sur les glissières 29c et sur la partie centrale 17a. Un système à glissières verticales aurait aussi pu convenir, bien que moins performant.

Ainsi, au moins lorsque la tablette est en position avancée comme sur les figures 7 et 8, ou encore comme sur les figures 3 et 5, il va être possible de déployer - figures 3 et 7 - ou de rétracter - figures 5 et 8 - les volets latéraux.

A l'extrémité avant, chaque glissière, et, en face, la caisse 3, comprennent l'une un pion repéré 45 figures 7 et 8, l'autre un logement, repéré 47 figure 8, adapté à recevoir le pion correspondant. Ainsi, en position avancée, et avant de déployer les volets, pourra-t-on tenir la tablette 17 à l'avant.

Dans l'exemple retenu, les pions 45 sont situés à l'extrémité axiale des glissières et les logements sont en regard prévus fixement sur la caisse 3.

Avec une telle réalisation, on peut réaliser comme suit l'escamotage de la tablette 17 à partir de sa position avancée, de service, qu'elle occupe tant toit fermé - figure 3 - que toit rangé - figure 4.

Considérons à cet égard que l'on souhaite découvrir l'habitacle à partir d'une position toit fermé, comme sur la figure 1, 3 ou 9, étant rappelé que dans cette position avancée, la tablette est entièrement en position haute, avec ses volets latéraux 17b déployés, comme figures 3 et 7.

D'abord, il va y avoir rétractation de ces volets, dans le sens de la flèche 49 de la figure 5, en direction de la partie centrale 17a de la tablette. Tiré par les câbles de commande tels que 41a, 41b, chaque volet peut s'engager dans une sorte de poche 90 de la tablette centrale ouverte latéralement et établie entre une paroi supérieure et une paroi inférieure telles que 170a1, 170a2, figure 8. Chaque volet est ainsi guidé suivant Y, dans la -partie de- poche concernée, sans mouvement relatif en hauteur poche/ volet. Des pions 91 fixés aux volets et coulissant dans des glissières 93 ménagés par exemple dans la paroi inférieure 170a2 assurent ce guidage, sans changement de position relative en hauteur entre volets et partie centrale 17a.

Cette rétractation des volets amène les rampes 39a, 39b à ne plus porter contre les butées 37a, 37b, ce qui abaisse par gravité le niveau des volets. Les biellettes 43a, 43b basculent vers le bas, ce qui descend également le niveau de la partie centrale 17a, et donc de toute la tablette, par rapport à la caisse environnante.

Comme montré figure 6, ce mouvement est complété par un recul de la tablette sous le capot 15, dans le sens de la flèche longitudinale 51, l'abaissement d'ensemble de la tablette lui permettant de passer sous la traverse 21 puis sous le capot dont la partie supérieure 150 vient sensiblement de niveau avec la traverse ; figure 2.

Un profond (axe X) et large (axe Y) passage 31 entre l'arrière 90a de l'habitacle et le bord avant 21a de la traverse - figure 2 - est ainsi libre pour le toit.

Figure 2 en particulier, on note que cette zone arrière 90a de l'habitacle est située derrière les sièges 53 les plus arrière. La zone 90a peut en particulier être constituée par une zone d'appui pour la tablette et/ou une zone de la caisse portant les logements 47 (figure 8). Il s'agit globalement de la zone où est située la cloison 55 de séparation entre l'habitacle 9 et l'espace 11 de rangement, cette cloison pouvant être constituée par l'arrière du dossier des sièges 53.

La libération du passage 31 fait que le toit 5 peut s'articuler, en particulier suivant un mouvement oscillo-coulissant, pour être rangé sensiblement à plat dans l'espace 11, en haut et vers l'avant du coffre, après avoir été reculé au moins en partie sous la traverse 21 et sous la tablette 17, alors en position reculée comme sur la figure 4.

Le toit peut alors être verrouillé en place et la tablette est commandée pour retourner vers sa position normale avancée des figures 4 et 5. Elle s'avance alors au-delà de l'avant du toit et ses volets latéraux, tels que 17b, sont à nouveau déployés latéralement, ce qui provoque leur élévation et celle, consécutive, de la partie centrale 17a, suite au contact entre les rampes 39a, 39b et les butées 37a, 37b.

L'espace précédemment libéré 31 est donc à nouveau occupé, comme montré figures 4 ou 10.

L'opération de découvrement de l'habitacle 9 est alors terminée, sans qu'il ait été nécessaire ni d'assurer une ouverture du capot 15 de l'avant vers l'arrière du véhicule pour le passage du toit, ni de prévoir un « tonneau cover » (dénomination habituelle d'un couvre tonneau).

Concernant le toit 5, du type rigide, il comprend plusieurs éléments de toit, repliables dans un sens et déployables dans l'autre.

On trouve en particulier ainsi un élément rigide de toit arrière 5a pourvu d'une lunette arrière 50 et, devant dans l'état fermé/déployé par exemple de la figure 1, au moins un élément avant rigide de toit qui vient alors sensiblement dans la continuité de ligne de l'élément arrière 5a pour couvrir l'habitacle 9 jusqu'à la traverse arrière 57 du pare-brise 59.

Dans la réalisation de toit illustrée, l'élément de toit avant est en plusieurs parties comprenant une partie de toit intermédiaire 5b bordée latéralement par des bras latéraux rigides, tels le bras latéral gauche 5b1 notamment sur les figures 1 et 9. Devant, état fermé, une partie avant de toit 5c s'étend jusqu'à la traverse 57. Pour la mobilité du toit, les bras latéraux longitudinaux tels que 5b1 sont articulés en deux parties 5b10, 5b11, elles-mêmes montées articulées respectivement vers l'avant de la partie de toit avant, en 61, et sur un côté de l'élément de toit arrière, en 63. Ainsi, il va être possible de replier les deux parties 5b10, 5b11 selon l'axe Y, sensiblement perpendiculairement à l'axe X -figure 10- et d'empiler les éléments de toit, l'élément de toit avant 5c passant ici sous l'élément de toit arrière 5a, comme montré figure 2, la figure 10 permettant d'illustrer la position repliée, transversale, des bras latéraux 5b10, 5b11 et les deux figures montrant, ensemble, l'empilage du toit 5 lorsqu'il est dans son état final rangé, replié.

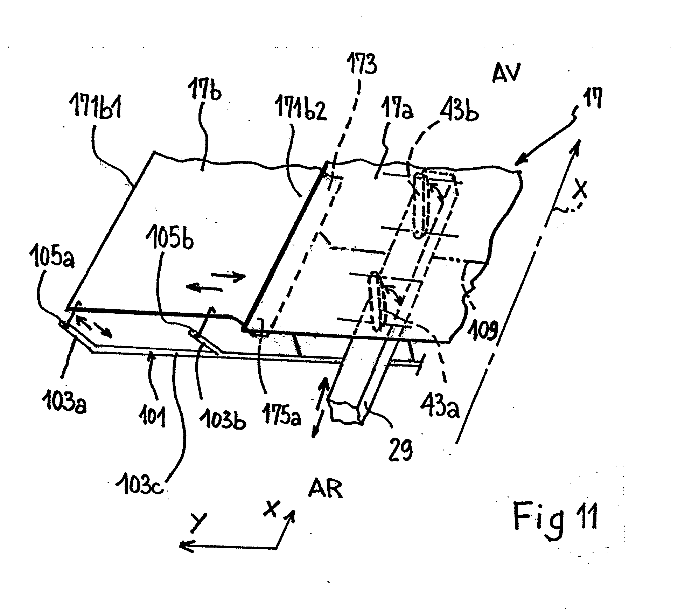

La variante figure 11 montre une possibilité de mouvement relatif en hauteur entre la partie centrale 17a et les volets, suivant que ces derniers sont en position escamotée ou déployée. Pour cela, des glissières télescopiques 101 orientées essentiellement suivant Y sont fixées sous la tablette centrale 17a et présentent localement deux rampes 103a,103b s'élevant de biais pour qu'y glissent des pions 105a,105b fixés aux volets vers leurs bords respectivement extérieur 171b1 et intérieur 171b2. Une commande (schématisée 109) motorisée comme figures 7 et 8 peut entraîner les volets suivant l'axe Y.

Ainsi, une fois les glissières longitudinales 29 arrivées en position déployée vers l'avant (AV), avec la partie centrale 17a et les volets 17b encore en position basse et ces derniers rétractés sous la partie 17a, il va être possible de conjuguer le déploiement latéral des volets et leur élévation par rapport à cette partie centrale 17a, les deux étant en outre élevés par rapport à la caisse environnante, en fin de mouvement. En effet, parvenus aux rampes 103a,103b, les pions 105a,105b vont faire s'élever chaque volet, jusqu'à ce qu'un rebord en contrebas et intérieur, 173, de ces volets vienne par-dessous pousser vers le haut chacun des bords latéraux extérieurs tels que 175a de la tablette centrale 17a qui va s'élever, guidée par exemple par les biellettes précitées 43a,43b. Ainsi, dans cette position déployée des volets, ceux-ci et la partie 17a sont alors, ensemble, dans une position plus haute par rapport à la caisse (et aux moyens 29) que dans la position basse précitée. A l'inverse, lors de la rétractation des volets, l'arrivée des pions dans la partie horizontale 103c des glissières située en contrebas abaisse ces volets, ainsi que la partie 17a, ramenant l'ensemble en la position basse pour un escamotage vers la position inactive de la tablette, ici vers l'arrière (AR), suivant X, par recul avec les glissières 29.

Il est encore à noter que les caractéristiques suivantes pourraient faire l'objet d'une protection séparée, non dépendantes des revendications jointes :
a)- le véhicule convertible comprend une caisse (3), un toit (5) escamotable monté articulé sur cette caisse, par des moyens de déplacement (7,25,27), entre une position de recouvrement de l'habitacle du véhicule et une position de rangement dans un espace (11) de rangement recouvert par un capot (15) pouvant être ouvert et fermé et situé derrière l'habitacle, lequel est alors découvert, et une tablette (17) montée mobile par des premiers moyens de déplacement (29,19) adaptés à déplacer cette tablette (17) entre une position de service située dans une zone entre l'arrière de l'habitacle et le capot (15) et une position inactive située à l'écart de cette zone,
   - ce véhicule se caractérise notamment en ce que :
      * la tablette (17) comprend une partie centrale (17a) et des volets latéraux (17b) montés mobiles par rapport à (sur) la partie centrale, transversalement à l'axe longitudinal du véhicule,
      * et des seconds moyens de déplacement (37a,39a,41a,43a,43b,101,91,93,105a,105b) sont prévus pour un déplacement entre :
         - une position escamotée dans laquelle une extrémité latérale libre (170b) des volets est rapprochée de la partie centrale et où celle-ci et les volets sont alors, ensemble, dans une position basse par rapport à la caisse,
         - et une position déployée dans laquelle ladite extrémité latérale libre desdits volets est plus éloignée de la partie centrale (17a) qu'en position escamotée et où celle-ci et les volets sont alors, ensemble, dans une position plus haute par rapport à la caisse que dans ladite position basse ; ceci permettant de réaliser de façon relativement simple un mouvement performant pour la tablette en liaison avec son environnement ;
b)- les seconds moyens de déplacement (37a,39a,41a,43a, 43b,101,91,93,105a,105b) sont adaptés à ce que les volets et la partie centrale de la tablette s'élèvent ensemble et/ou s'abaissent ensemble par rapport à la caisse (3), entre lesdites positions escamotée et déployée des volets, sans changer de position relative en hauteur ;
   - et/ou, pour élever la partie centrale de la tablette et les volets ensemble par rapport à la caisse:
      * les seconds moyens de déplacement comprennent des premiers organes (39b,39a) qui sont mobiles avec les volets, transversalement à l'axe longitudinal du véhicule, et prennent appui sur des seconds organes (37a,37b) portés par les premiers moyens de déplacement (29),
      * les seconds moyens de déplacement sont adaptés à ce que les volets et la partie centrale de la tablette s'élèvent ensemble et/ou s'abaissent ensemble par rapport aux premiers moyens de déplacement (29,19) et,
      * des organes de liaison (tels 43,90,91) lient ensemble la partie centrale de la tablette et les volets, dans leur déplacement en hauteur par rapport à ces premiers moyens de déplacement (29,19).

Est également protégeable en soi le procédé présenté avant dans la description qui permet d'escamoter et de déployer les volets latéraux 17b sur une tablette (ici 17) montée mobile sur la caisse du véhicule convertible, en relation avec le rangement du toit 5 dans l'espace 11 prévu pour être partiellement recouvert par le capot articulé 15 et situé donc, dans la caisse (3), derrière l'habitacle.
Pour cela, la tablette et le toit sont respectivement :
- mobile entre lesdites positions de service et inactive située à l'écart de cette zone,
- et articulé sur la caisse entre lesdites position de recouvrement et rangée,
Dans ce contexte, ce procédé est tel que :
- on monte les volets latéraux 17) mobiles transversalement à l'axe longitudinal du véhicule par rapport à une partie centrale 17a de la tablette,
- et on déplace ces volets latéraux entre:
   - leur dite position escamotée où l'extrémité latérale libre (170b) des volets est rapprochée de la partie centrale et où celle-ci et les volets sont alors en position basse par rapport à la caisse,
   - et leur dite position déployée où ladite extrémité latérale libre des volets est plus éloignée de la partie centrale qu'en position escamotée et où celle-ci et les volets sont alors en position plus haute par rapport à la caisse que précédemment.

## Revendications

1. Véhicule convertible comprenant une caisse (3), un toit (5) escamotable monté articulé sur cette caisse, par des moyens de déplacement (7,25,27), entre une position de recouvrement de l'habitacle du véhicule et une position de rangement dans un espace (11) de rangement recouvert par un capot (15) monté articulé sur la caisse (3) et situé derrière l'habitacle, lequel est alors découvert, et une tablette (17) montée mobile sur la caisse (3) par des premiers moyens de déplacement (29,19) adaptés à déplacer cette tablette (17) entre une position avancée jusque devant le capot (15) et une position reculée sous le capot, la caisse (3) comprenant en outre une traverse (21) s'étendant transversalement à l'axe longitudinal du véhicule, entre le capot (15) et le toit (5) lorsque celui-ci est en position de recouvrement,
**caractérisé en ce que** les premiers moyens de déplacement (29,19) de la tablette (17) sont adaptés à déplacer celle-ci pour qu'en position reculée elle soit située en partie sous la traverse (21).

2. Véhicule selon la revendication 1, **caractérisé en ce que** les moyens de déplacement du toit (5) et les premiers moyens de déplacement de la tablette (17) par rapport à la caisse (3) sont adaptés pour que :
- la tablette (17) passe de sa position avancée à sa position reculée en descendant et en reculant, de sorte à passer sous la traverse (21),
- et le toit passe de sa position de recouvrement à sa position de rangement en passant sous la traverse et la tablette.

3. Véhicule selon la revendication 1 ou la revendication 2, **caractérisé en ce que** :
- le toit (5) est articulé à la caisse (3) autour d'un axe (270) transversal à l'axe longitudinal du véhicule et situé derrière l'habitacle (9), et
- les moyens premiers de déplacement (29,19) de la tablette (17) sont adaptés pour qu'en position reculée une partie avant de celle-ci soit située à proximité immédiate de l'axe d'articulation du toit (5), à un niveau d'élévation plus élevé que cet axe (270),
- et/ou les premiers moyens de déplacement (29,19) de la tablette sont adaptés pour qu'en position reculée elle soit située en partie au-dessus dudit axe d'articulation du toit,
- et/ou ledit axe (270) d'articulation est situé à proximité du niveau de la traverse (21), mais plus bas qu'elle et sensiblement au droit de cette traverse ou près d'elle, en avant ou en arrière.

4. Véhicule selon la revendication 3, **caractérisé en ce que** :
- la caisse (3) présente deux ailes arrière,
- l'axe transversal d'articulation (270) du toit (5) passe par au moins deux paliers (33) liés à la caisse (3) et à l'endroit desquels le toit (5) s'articule,
- et la traverse se raccorde latéralement à la caisse, vers ses ailes arrière, à proximité desdits paliers (33).

5. Véhicule selon la revendication 3, **caractérisé en ce que** :
- les premiers moyens de déplacement de la tablette (17) comprennent des glissières (29) globalement parallèles à l'axe longitudinal du véhicule,
- et l'axe transversal d'articulation (270) du toit (5) à la caisse (3) passe par au moins deux paliers (33) liés à la caisse entre lesquelles sont situées lesdites glissières, lesquelles sont fixées à ces paliers (33), ainsi qu'à la caisse (3) vers leur extrémité arrière.

6. Véhicule selon l'une des revendications précédentes, **caractérisé en ce que** :
- la tablette (17) comprend une partie centrale (17a) et des volets latéraux (17b) montés mobiles par rapport à la partie centrale, transversalement à l'axe longitudinal du véhicule,
- et des seconds moyens de déplacement (37a,39a,41a,43a, 43b,101,91,93,105a,105b) sont prévus pour un déplacement entre :
. une position escamotée dans laquelle une extrémité latérale libre (170b) des volets est rapprochée de la partie centrale et où celle-ci et les volets sont alors, ensemble, dans une position basse par rapport à la caisse,
. et une position déployée dans laquelle ladite extrémité latérale libre desdits volets est plus éloignée de la partie centrale (17a) qu'en position escamotée et où celle-ci et les volets sont alors, ensemble, dans une position plus haute par rapport à la caisse que dans ladite position basse.

7. Véhicule selon l'une des revendications précédentes, **caractérisé en ce que** les premiers moyens de déplacement de la tablette (17) comprennent des glissières (29) globalement parallèles à l'axe longitudinal du véhicule, chacune en plusieurs parties, montées rétractables et déployables longitudinalement par l'intermédiaire desdits premiers moyens de déplacement (29,19), pour que l'avant de ces glissières (29) recule lors du recul de la tablette (17) et avance lors de son avancée.

8. Véhicule selon la revendication 7, **caractérisé en ce que** chaque glissière (29), vers son extrémité avant, et la caisse (3), en face, comprennent l'une des pions (45), l'autre des logements (47) coopérants, pour qu'en position avancée, la tablette (17) soit tenue vers l'avant par inter-engagement des pions et des logements.

9. Véhicule selon la revendication 6, **caractérisé en ce que** les seconds moyens de déplacement (37a,39a,41a, 43a,43b,101,91,93,105a,105b) sont adaptés à ce que les volets et la partie centrale de la tablette s'élèvent ensemble et/ou s'abaissent ensemble par rapport à la caisse (3), entre lesdites positions escamotée et déployée des volets, sans changer de position relative en hauteur.

10. Véhicule selon la revendication 6 ou la revendication 9, **caractérisé en ce que**, pour élever la partie centrale de la tablette et les volets ensemble par rapport à la caisse:
- les seconds moyens de déplacement comprennent des premiers organes (39b,39a) qui sont mobiles avec les volets, transversalement à l'axe longitudinal du véhicule, et prennent appui sur des seconds organes (37a,37b) portés par les premiers moyens de déplacement (29),
- les seconds moyens de déplacement sont adaptés à ce que les volets et la partie centrale de la tablette s'élèvent ensemble et/ou s'abaissent ensemble par rapport aux premiers moyens de déplacement (29,19) et,
- des organes de liaison (43,90,91) lient ensemble la partie centrale de la tablette et les volets, dans leur déplacement en hauteur par rapport à ces premiers moyens de déplacement (29, 19) .

11. Véhicule selon la revendication 6 et la revendication 7, **caractérisé en ce que** :
- les premiers et les seconds organes comprennent, les uns des butées (37a), les autres des rampes inclinées (39a) par rapport à l'horizontale venant en contact avec lesdites butées, pour faire monter et descendre la tablette lors du déplacement transversal des volets par rapport à la partie centrale (17a) de ladite tablette,
- et entre l'une au moins des parties de glissières (29) et cette partie centrale de tablette sont montés des moyens de liaison (43) adaptées à permettre entre elles un mouvement de montée et de descente en fonction dudit contact entre les butées (37a) et les rampes (39a).

12. Véhicule selon la revendication 6 et/ou la revendication 3, **caractérisé en ce que** la tablette (17) comprend une partie centrale (17a) et des volets latéraux (17b) montés mobiles par rapport à la partie centrale, transversalement à l'axe longitudinal du véhicule, et les premiers moyens de déplacement (29,19) de la tablette sont adaptés à la déplacer pour qu'en reculant elle passe entre la traverse (21), au dessus, et ledit axe d'articulation (270) du toit, en-dessous.

13. Véhicule selon la revendication 6 ou la revendication 9, **caractérisé en ce que**:
- les premiers moyens de déplacement de la tablette (17) comprennent des glissières (29) globalement parallèles à l'axe longitudinal du véhicule,
- ces glissières (29) et les seconds moyens de déplacement comprennent, les uns des butées (37a), les autres des rampes inclinées (39a) par rapport à l'horizontale venant en contact avec lesdites butées, pour faire monter et descendre la tablette, lors du déplacement transversal des volets par rapport à la partie centrale de la tablette,
- et entre l'une au moins des parties de glissières (29) et cette partie centrale de tablette sont montés des moyens de liaison (43) adaptées à permettre entre elles un mouvement de montée et de descente en fonction dudit contact entre les butées (37a) et les rampes (39a).

14. Véhicule selon la revendication 11 ou 13, **caractérisé en ce que** lesdits moyens de liaison comprennent des biellettes articulées (43).

15. Véhicule la revendication 6, **caractérisé en ce que** la partie centrale (17a) de la tablette comprend latéralement deux poches ouvertes (90) où s'engagent plus ou moins les volets (17b) en positions escamotée et déployée, en y étant guidés, sans mouvement relatif en hauteur.

16. Véhicule convertible comprenant une caisse (3), un toit (5) escamotable monté articulé sur cette caisse, par des moyens de déplacement (7,25,27), entre une position de recouvrement de l'habitacle du véhicule et une position de rangement dans un espace (11) de rangement recouvert par un capot (15) pouvant être ouvert et fermé et situé derrière l'habitacle, lequel est alors découvert, et une tablette (17) montée mobile par des premiers moyens de déplacement (29,19) adaptés à déplacer cette tablette (17) entre une position de service située dans une zone entre l'arrière de l'habitacle et le capot (15) et une position inactive située à l'écart de cette zone, **caractérisé en ce que** :
- la tablette (17) comprend une partie centrale (17a) et des volets latéraux (17b) montés mobiles par rapport à la partie centrale, transversalement à l'axe longitudinal du véhicule,
- et des seconds moyens de déplacement (37a,39a,41a,43a,43b,101,91,93,105a,105b) sont prévus pour un déplacement entre :
. une position escamotée dans laquelle une extrémité latérale libre (170b) des volets est rapprochée de la partie centrale et où celle-ci et les volets sont alors, ensemble, dans une position basse par rapport à la caisse,
. et une position déployée dans laquelle ladite extrémité latérale libre desdits volets est plus éloignée de la partie centrale (17a) qu'en position escamotée et où celle-ci et les volets sont alors, ensemble, dans une position plus haute par rapport à la caisse que dans ladite position basse.

17. Procédé pour ranger un toit (5) escamotable dans un espace (11) situé derrière l'habitacle d'un véhicule convertible et réservé dans une caisse (3) de ce véhicule, le toit (5) étant articulé sur la caisse entre une position de recouvrement de l'habitacle et une position rangée dans ledit espace de rangement lequel est recouvert par un capot (15) monté articulé sur la caisse, et une tablette (17) étant, pour le rangement du toit, montée mobile sur la caisse entre une position avancée jusque devant le capot et une position reculée sous le capot, la caisse comprenant en outre une traverse (21) s'étendant transversalement à l'axe longitudinal du véhicule, entre le capot et le toit lorsque celui-ci est en position de recouvrement, **caractérisé en ce que** :
- à partir de ladite position de recouvrement de l'habitacle par le toit (5), et alors que la tablette (17) est en position avancée, on descend et on recule cette tablette sous le capot (15) en la faisant passer sous la traverse (21), libérant ainsi, pour le toit, un passage (31) situé, suivant l'axe longitudinal du véhicule, entre une zone située à proximité de l'arrière de l'habitacle (9) et la traverse,
- on déplace le toit en l'articulant sur la caisse (3), jusqu'à le faire passer à travers ledit passage, en le reculant au moins en partie sous la traverse (21) et sous la tablette (17) alors en position reculée,
- et, une fois que le toit (5) a entièrement traversé ledit passage et est situé plus bas que lui, on déplace en retour la tablette vers sa position avancée, par-dessus le toit, jusqu'à ce qu'elle ferme une partie au moins dudit passage réservé pour celui-ci.

18. Procédé pour escamoter et déployer des volets latéraux (17b) sur une tablette (17) montée mobile sur une caisse (3) d'un véhicule convertible, en relation avec le rangement du toit (5) de ce véhicule dans un espace (11) situé, dans la caisse (3), derrière l'habitacle du véhicule, la tablette (17) et le toit (5) étant pour cela respectivement :
- mobile entre une position de service située dans une zone entre l'arrière de l'habitacle et le capot (15) et une position inactive située à l'écart de cette zone, et
- articulé sur la caisse entre une position de recouvrement de l'habitacle et une position rangée dans ledit espace (11), lequel est recouvrable par un capot (15) monté articulé sur la caisse,
ce procédé étant tel que :
- on monte les volets latéraux (17b) mobiles transversalement à l'axe longitudinal du véhicule par rapport à une partie centrale(17a) de la tablette (17),
- et on déplace ces volets latéraux (17b) entre:
. une position escamotée dans laquelle une extrémité latérale libre (170b) des volets est rapprochée de la partie centrale et où celle-ci et les volets sont alors, ensemble, dans une position basse par rapport à la caisse,
. et une position déployée dans laquelle ladite extrémité latérale libre desdits volets est plus éloignée de la partie centrale (17a) qu'en position escamotée et où celle-ci et les volets sont alors, ensemble, dans une position plus haute par rapport à la caisse que dans ladite position basse.
